# EUROPÄISCHE PATENTSCHRIFT

(11) **EP 1 640 376 B1**
(45) Veröffentlichungstag und Bekanntmachung des Hinweises auf die Patenterteilung: **20.07.2011**
(21) Anmeldenummer: 05020412.2
(22) Anmeldetag: 20.09.2005
(51) Int. Cl.: C07F 9/11

(54) **Verfahren zur Herstellung von Alk(en)ylphosphorsäureestersalzen**
Process for the preparation of salts of alk(en)ylphosphoric acid esters
Procédé de préparation de sels de l'acide alk(en)ylphosphorique

(30) Priorität: 24.09.2004 DE 102004046356
(43) Veröffentlichungstag der Anmeldung: 29.03.2006
(73) Patentinhaber: Clariant Produkte (Deutschland) GmbH, 65929 Frankfurt am Main (DE)
(72) Erfinder: Stehr, Wolfgang, 35150 Butzbach (DE); Loeffler, Matthias, Dr., 65527 Niedernhausen (DE); Morschhaeuser, Roman, Dr., 55122 Mainz (DE)

(56) Entgegenhaltungen:
- EP-A- 0 385 406
- EP-A- 0 445 785
- KASUGA K ET AL: "Transport of Monosaccharides through a Liquid Membrane Mediated by Lipophilic Alkaline Earth Metal Complexes" TETRAHEDRON LETTERS, ELSEVIER, AMSTERDAM, NL, Bd. 39, Nr. 52, 24. Dezember 1998 (1998-12-24), Seiten 9699-9702, XP004144296 ISSN: 0040-4039
- DATABASE CAPLUS [Online] CHEMICAL ABSTRACTS SERVICE, COLUMBUS, OHIO, US; "Phosphoric acid monoester salts" XP002360299 gefunden im STN Database accession no. 1982:34551 & JP 56 087589 A2 (KAO SOAP CO., LTD., JAPAN) 16. Juli 1981 (1981-07-16)

## Beschreibung

Die Erfindung betrifft ein Verfahren zur Herstellung von Alk(en)ylphosphorsäureestersalzen aus entsprechenden Alk(en)ylphosphorsäureestern.

Alk(en)ylphosphorsäureester zeichnen sich durch sehr gute Detergenzeigenschaften und durch hohe ökotoxikologische Verträglichkeit aus. Aus diesem Grund gewinnen diese anionischen Tenside zunehmende Bedeutung. Neben einem Einsatz in flüssigen Formulierungen, wie z.B. in Handgeschirrspülmittel und Shampoos gewinnt die Verwendung fester, lösungsmittelfreier Phosphorsäureester, insbesondere deren Salze, in festen, wasserfreien Formulierungen an Bedeutung. Vorteilhaft sind die Phosphorsäureestersalze, die aufgrund ihrer neutralen pH-Werte sehr gut hautverträglich sind und als Emulgatoren in kosmetischen und pharmazeutischen Formulierungen, aber auch in Wasch- und Reinigungsmitteln, wertvoll sind.

Die Darstellung von Alkyl- und Alkenylphosphorsäureestern erfolgt üblicherweise durch Umsetzung von Tetraphosphordecaoxid mit Fettalkoholen unter Bildung von Mono- und Diestern mit geringen Anteilen an Triestern.

In JP 62 198 690 wird ein Verfahren zur Neutralisation von Phosphorsäurestern beschrieben, wobei der saure Phosphorsäureester in einem hydroxylhaltigen, wasserlöslichen Reaktionsmedium, beispielsweise Propylenglykol gelöst wird und dann eine Base zugegeben wird. Dieses Verfahren hat den Nachteil, dass die hydroxylhaltigen Lösungsmittel selbst mit dem Phosphorsäureester Veresterungsreaktionen eingehen können, die Produktzusammensetzung und damit das Eigenschaftsprofil geändert wird und die Ausbeute der Zielverbindung reduziert ist.

EP 1 120 456 offenbart die Neutralisation von Phosphorsäureestern in wässrigem Medium mit anschließender Trocknung in der Wirbelschicht. Hierbei ist jedoch ein hoher Energieeintrag erforderlich.

In EP 1 321 470 wird beschrieben, dass der Neutralisationsschritt von Alk(en)ylphosphorsäureestern lösungsmittelfrei erfolgen kann, wenn ein Phosphorsäureester, hergestellt durch Umsetzung von Tetraphosphordecaoxid mit Fettalkohol, bis zur Schmelze erwärmt wird und unter kräftigem Rühren eine heiß gesättigte wässrige Lösung an Neutralisationsmittel, beispielsweise Alkalimetallhydroxid, zudosiert wird. Durch intensives Mischen werden feste Phosphorsäureestersalze erhalten. Unbefriedigend hierbei ist, dass die Durchmischung von Phosphorsäureester und Neutralisationsmittel nur mit sehr aufwendigen und teuren Knetervarianten gelingt, da die Viskosität der Schmelze mit zunehmender Salzbildung dramatisch ansteigt. Mit üblichen Schaufeltrocknern gelingt die Durchmischung nur unzureichend und die Salzbildung bleibt unvollständig.

Es bestand somit die Aufgabe, ein Verfahren zur Herstellung fester, wasserfreier Salze von Alk(en)ylphosphorsäureestern zu entwickeln, das frei von den oben geschilderten Nachteilen ist.

Überraschenderweise konnte die Aufgabe gelöst werden, indem saure Alk(en)ylphosphorsäureester in einem aprotischen Lösungsmittel oder aprotischen Lösungsmittelgemisch, ausgewählt aus aliphatischen Kohlenwasserstoffen, cyclischen Kohlenwasserstoffen, aromatischen Kohlenwasserstoffen und Mischungen der genannten Lösungsmittel, mit einer Base, aus der das Gegenion hervorgeht, umgesetzt werden.

Gegenstand der Erfindung ist somit ein Verfahren zur Herstellung von Alk(en)ylphosphorsäureestersalzen der Formel (I) und/oder der Formel (II) 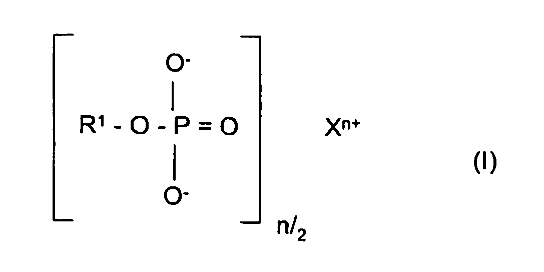 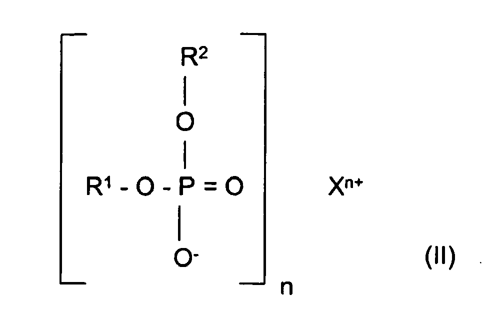 worin
- R¹ und R²: gleich oder verschieden sind und unabhängig voneinander für einen linearen oder verzweigten Alkylrest mit 1 bis 30 Kohlenstoffatomen oder für einen linearen oder verzweigten Alkenylrest mit 2 bis 30 Kohlenstoffatomen stehen und
- Xⁿ⁺: für ein Kation mit der Wertigkeit n steht,
dadurch gekennzeichnet, dass Alk(en)ylphosphorsäureester der Formel (III) und/oder der Formel (IV) 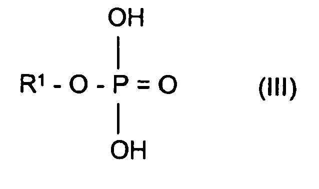 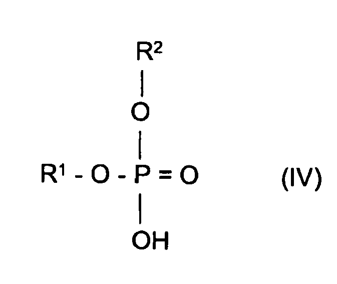 worin R¹ und R² die oben angegebene Bedeutung besitzen,
in einem aprotischen Lösungsmittel oder aprotischen Lösungsmittelgemisch, ausgewählt aus aliphatischen Kohlenwasserstoffen, cyclischen Kohlenwasserstoffen, aromatischen Kohlenwasserstoffen und Mischungen der genannten Lösungsmittel, mit einer Base, aus der das Kation Xⁿ⁺ hervorgeht, umgesetzt werden.

In K. Kasuga et al., "Transport of Monosaccharides through a Liquid Membrane Mediated by Lipophilic Alkaline Earth Metal Complexes", Tetrahedron Letters, 39 (1998) 9699-9702, wird beispielsweise die Herstellung bestimmter Erdalkalimetallsalze von speziellen Alkylphosphorsäurediestern in Chloroform CHCl₃ beschrieben.

In CAPLUS [Online], Chemical Abstracts Service, "Phosphoric acid monoester salts", XP002360299 (JP 5608759 A2) wird z. B. die Herstellung von Na- oder K-Salzen von C₈-C₁₈-Fettalkoholphosphorsäuremonoestern in wasserlöslichen Lösungsmitteln wie Methanol, Ethanol, Isopropanol oder Aceton offenbart.

In EP 0 445 785 A1 wird beispielsweise die Herstellung des Zink-Salzes von Natrium-Monoacetylphosphat beschrieben, wobei von Monoacetylphosphorsäure in Ethanol ausgegangen wird, die zunächst mit NaOH und anschließend mit ZnSO_{4 ˙} 7 H₂O umgesetzt wird.

Das erfindungsgemäße Verfahren zeichnet sich beispielsweise durch sehr hohe Ausbeuten und eine einfache Verfahrensweise aus.

Die Herstellung der Alk(en)ylphosphorsäureester der allgemeinen Formeln (III) und (IV) erfolgt in der Regel durch Kondensation von Phosphorpentoxid oder Orthophosphorsäure mit Alkoholen, beispielsweise Methanol, Ethanol, Propanol, Isopropanol, Butanol, insbesondere mit Fettalkoholen, wie Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Linolylalkohol, Linolenylalkohol, Elaeostearylalkohol, Arachylalkohol, Gadoleylalkohol, Behenylalkohol, Erucylalkohol, Brassidylalkohol sowie Mischungen derselben.

Bei der Herstellung der Alk(en)ylphosphorsäureester entstehen regelmäßig Gemische aus Mono-, Di- und Triphosphorsäureestern, deren pH-Wert üblicherweise im Bereich 2 bis 5 liegt.

In einer bevorzugten Ausführungsform der Erfindung wird als Alk(en)ylphosphorsäureester eine Mischung enthaltend Alk(en)ylphosphorsäureester der Formeln (III) und (IV) eingesetzt, wobei der Anteil an Alk(en)ylphoshorsäureester(n) der Formel (III), bezogen auf die Mischung, größer 60 Gew.-% und insbesondere größer 80 Gew.-% ist. Anteile an Triphosphorsäureestern stören bei der Umsetzung nicht.

Vorzugsweise sind die Reste R¹ und R² gleich oder verschieden und stehen unabhängig voneinander für einen linearen oder verzweigten Alkylrest mit 6 bis 22 Kohlenstoffatomen oder für einen linearen oder verzweigten Alkenylrest mit 6 bis 22 Kohlenstoffatomen.

Ausdrücklich sei vermerkt, dass der Begriff Base auch Mischungen chemisch verschiedener Basen umfasst. In diesem Fall enthalten die Alk(en)ylphosphorsäureestersalze der Formeln (I) und (II) regelmäßig verschiedene Kationen Xⁿ⁺, die bei der Neutralisation aus den verschiedenen Basen hervorgehen.

Bei den Basen kann es sich um alle organischen oder anorganischen Basen handeln, die geeignet sind die OH-Gruppen der Alk(en)ylphosphorsäureester zu neutralisieren.

Vorzugsweise wird die Base als wässrige Lösung oder als Pulver eingesetzt. Besonders bevorzugt wird die Base in Form einer konzentrierten wässrigen Lösung, einer gesättigten wässrigen Lösung oder in Form eines Pulvers eingesetzt. Außerordentlich bevorzugt wird die Base in Form einer gesättigten wässrigen Lösung eingesetzt.

Vorzugsweise sind die Basen ausgewählt aus Metallhydroxiden, Metalloxiden, Ammoniak, primären Aminen, sekundären Aminen, tertiären Aminen, Alkanolaminen, Aminosäuren und Mischungen dieser Substanzen.

Demnach handelt es sich bei den Kationen Xⁿ⁺ in den Formeln (I) und (II) bevorzugt um Metall-Ionen, NH₄⁺ und Ammonium-Ionen abgeleitet von Aminen, Alkanolaminen und Aminosäuren. Bevorzugt hat n den Wert 1, 2 oder 3, besonders bevorzugt den Wert 1 oder 2 und insbesondere bevorzugt den Wert 1.

Als Metallhydroxide bevorzugt sind Alkalimetallhydroxide, insbesondere NaOH und KOH, Erdalkalimetallhydroxide, insbesondere Ca(OH)₂, und Erdmetallhydroxide, insbesondere Al(OH)₃.

Als Amine bevorzugt sind primäre Amine mit langkettigen Alkylgruppen mit 1 bis 30 Kohlenstoffatomen, besonders bevorzugt mit 4 bis 22 Kohlenstoffatomen oder primäre Amine mit Arylgruppen mit 6 bis 30 Kohlenstoffatomen, besonders bevorzugt mit 6 bis 10 Kohlenstoffatomen.

Als Alkanolamine bevorzugt sind Monoethanolamin, Diethanolamin und Triethanolamin.

Besonders bevorzugte Basen sind ausgewählt aus Alkalimetallhydroxiden, Erdalkalimetallhydroxiden und Mischungen dieser Substanzen. Insbesondere bevorzugt sind die Basen ausgewählt aus NaOH, KOH, Ca(OH)₂ und Mischungen dieser Substanzen, ganz besonders bevorzugt ist die Base KOH.

Das Molverhältnis von Alk(en)ylphosphorsäureester(n) zu Base liegt vorzugsweise im Bereich von 1 : 0,1 bis 1 : 2, besonders bevorzugt im Bereich von 1 : 0,75 bis 1 : 1,25, insbesondere bevorzugt im Bereich von 1 : 0,9 bis 1 : 1,1 und ist ganz besonders bevorzugt 1:1.

Erfindungsgemäß werden zur Neutralisation der Alk(en)ylphosphorsäureester mit Basen die Phosphorsäureester gemäß der Formel III und/oder IV in aprotischen Lösungsmitteln gelöst oder suspendiert.

Das aprotische Lösungsmittel oder das aprotische Lösungsmittelgemisch ist ausgewählt aus aliphatischen Kohlenwasserstoffen, cyclischen Kohlenwasserstoffen, aromatischen Kohlenwasserstoffen und Mischungen der genannten Lösungsmittel.

Bevorzugte aliphatische Kohlenwasserstoffe sind ausgewählt aus geradkettigen oder verzweigten C₅-C₃₀-Alkanen und geradkettigen oder verzweigten C₅-C₃₀-Alkenen.

Bevorzugte cyclische Kohlenwasserstoffe sind ausgewählt aus C₅-C₈-Cycloalkanen.

Bevorzugte aromatische Kohlenwasserstoffe sind ausgewählt aus Benzol, Toluol, Ethylbenzol, Xylolen und Cresolen. Unter diesen aromatischen Kohlenwasserstoffen sind wiederum Toluol und Xylole bevorzugt.

Besonders bevorzugt ist das aprotische Lösungsmittel oder das aprotische Lösungsmittelgemisch ausgewählt aus Pentan, Hexan, Heptan, Cyclohexan, Toluol, Xylolen und Mischungen dieser Lösungsmittel.

Außerordentlich bevorzugt ist das aprotische Lösungsmittel Cyclohexan.

Die Umsetzung der Alk(en)ylphosphorsäureester mit der Base erfolgt vorzugsweise bei Temperaturen von 0 bis 300°C und besonders bevorzugt bei Temperaturen von 25 bis 180°C und vorzugsweise über einen Zeitraum von 0,1 bis 10 Stunden, besonders bevorzugt von 0,1 bis 5 Stunden und insbesondere bevorzugt von 0,1 bis 3 Stunden.

Bei der Herstellung der Alk(en)ylphosphorsäureestersalze der Formel (I) und/oder der Formel (II) wird vorzugsweise so vorgegangen, dass die Alk(en)ylphosphorsäureester der Formel (III) und/oder der Formel (IV) in einem aprotischen Lösungsmittel oder aprotischen Lösungsmittelgemisch gelöst oder suspendiert werden, die entstehende Lösung oder Suspension bis zur Siedetemperatur erwärmt wird, die Base, aus der das Kation Xⁿ⁺ hervorgeht, langsam zudosiert wird, das Reaktionswasser ausgekreist wird und das Lösungsmittel bzw. Lösungsmittelgemisch bei vermindertem Druck abdestilliert wird.

Vorteilhafterweise liegt die Reaktionstemperatur in der Nähe des Siedepunktes des verwendeten Lösungsmittels, da das entstehende Reaktionswasser in der Siedehitze azeotrop ausgeschleppt wird. Im Falle des Cyclohexans liegt die optimale Betriebstemperatur bei 80 bis 87°C.

Das anfallende Produkt wird nach Abkühlen auf Raumtemperatur geeignet konfektioniert. So kann das Produkt als Blockware abgefüllt werden oder zu Schuppenware verarbeitet werden. Bevorzugt wird es zu einem Pulver bzw. zu Granulaten, bevorzugt mit Korngrößen von 0,1 µm bis 1 cm vermahlen.

Die erfindungsgemäß hergestellten Alk(en)ylphosphorsäureestersalze sind für den Einsatz in kosmetischen und pharmazeutischen Formulierungen, insbesondere zur Herstellung von Öl-in-Wasser-Emulsionen, aber auch von Wasser-in-Öl-Emulsionen, geeignet, ebenso als Detergenzien in Wasch- und Reinigungsmitteln, sowie als Adjuvant in Schädlingsbekämpfungsmitteln.

Die Alk(en)ylphosphorsäureestersalze werden üblicherweise in Mengen von 0,1 bis 10 Gew.-%, bevorzugt von 0,3 bis 4 Gew.-%, bezogen auf die fertigen Formulierungen, eingesetzt.

Als weitere Hilfs- und Zusatzstoffe können unter anderem Tenside, Emulgatoren, Ölkörper, Bleichmittel, Überfettungsmittel, Fette, Wachse, Stabilisatoren, biogene Wirkstoffe, Glycerin, Konservierungsmittel, Farb- und/oder Duftstoffe in den Formulierungen enthalten sein.

Die nachfolgenden Beispiele dienen der näheren Erläuterung der Erfindung ohne sie jedoch darauf einzuschränken. Alle Prozentangaben sind Gewichtsprozente.

### Allgemeine Verfahrensvorschrift

In einem 5000 ml Schaufeltrockner wurden 800 g Hostaphat® CC 100 vorgelegt und mit 800 g organischem Lösungsmittel gelöst. Die Lösung wurde auf Siedetemperatur angeheizt und am Rückfluss gehalten. Anschließend wurde in äquimolarer Menge Kaliumhydroxid (als 50, 80 oder 95 Gew.-%ige wässrige Lösung) in einer halben Stunde (1/2 h) zudosiert und das anfallende Wasser weitestgehend ausgekreist. Nach Ende der KOH-Zugabe wurde der Ansatz unter reduziertem Druck bis zur Produkttrockne abdestilliert (Lösungsmittel, Reaktionswasser) und anschließend auf 20°C abgekühlt. Es wurde ca. 1 h nachgerührt und das Produkt anschließend aus dem Trockner ausgetragen und geeignet konfektioniert.

### Beispiel 1: Herstellung des Kaliumsalzes des Mono-Cetylphosphorsäureesters mit 50 Gew.-%iger KOH in Cyclohexan

1) Vorlage von 800 g Hostaphat® CC 100 (Monocetylphosphat, Firma Clariant) im Schaufeltrockner
2) Lösen in 800 g Cyclohexan
3) Erwärmen auf Siedetemperatur (etwa 85°C)
4) Zugabe von 306 g KOH (50 Gew.-%ig) innerhalb von 0,5 h bei Siedetemperatur und Auskreisen von Reaktionswasser
5) Abdestillieren von Lösungsmittel und Restwasser bei 20 bis 70°C und 0,1 bis 500 mbar
6) Abkühlen auf 20°C und ca. 1 h rühren
7) Konfektionierung durch Vermahlen

### Beispiel 2: Herstellung des Kaliumsalzes des Mono-Cetylphosphorsäureesters mit 80 Gew.-%iger KOH in Cyclohexan

1) Vorlage von 800 g Hostaphat® CC 100 (Monocetylphosphat, Firma Clariant) im Schaufeltrockner
2) Lösen in 800 g Cyclohexan
3) Erwärmen auf Siedetemperatur (85°C)
4) Zugabe von 191 g KOH (80 Gew.-%ig) innerhalb von 0,5 h bei Siedetemperatur und Auskreisen von Reaktionswasser
5) Abdestillieren von Lösungsmittel und Restwasser bei 50 bis 70°C und 2 bis 500 mbar
6) Abkühlen auf 20°C und ca. 1 h rühren
7) Konfektionierung durch Vermahlen

### Beispiel 3: Herstellung des Kaliumsalzes des Mono-Cetylphosphorsäureesters mit 50 Gew.-%iger KOH in n-Hexan

1) Vorlage von 800 g Hostaphat® CC 100 (Monocetylphosphat, Firma Clariant) im Schaufeltrockner
2) Lösen in 800 g n-Hexan
3) Erwärmen auf Siedetemperatur (etwa 80°C)
4) Zugabe von 306 g KOH (50 Gew.-%ig) innerhalb von 0,5 h bei Siedetemperatur und Auskreisen von Reaktionswasser
5) Abdestillieren von Lösungsmittel und Restwasser bei 20 bis 80°C und 10 bis 900 mbar
6) Abkühlen auf 20°C und ca. 1 h rühren
7) Konfektionierung durch Vermahlen

### Beispiel 4: Herstellung des Kaliumsalzes des Mono-Cetylphosphorsäureesters mit 95 Gew.-%iger KOH in n-Hexan

1) Vorlage von 800 g Hostaphat® CC 100 (Monocetylphosphat, Firma Clariant) im Schaufeltrockner
2) Lösen in 800 g n-Hexan
3) Erwärmen auf Siedetemperatur (etwa 80°C)
4) Zugabe von 161 g KOH (95 Gew.-%ig) innerhalb von 0,5 h bei Siedetemperatur und Auskreisen von Reaktionswasser
5) Abdestillieren von Lösungsmittel und Restwasser bei 20 bis 70°C und 100 bis 900 mbar
6) Abkühlen auf 20°C und ca. 1 h rühren
7) Konfektionierung durch Vermahlen

Das Produkt der Beispiele 1 bis 4 ist ein weißes bis leicht gelbliches Pulver mit einem Schmelzpunkt von 150 bis 170°C.

## Patentansprüche

1. Verfahren zur Herstellung von Alk(en)ylphosphorsäureestersalzen der Formel (I) und/oder der Formel (II) 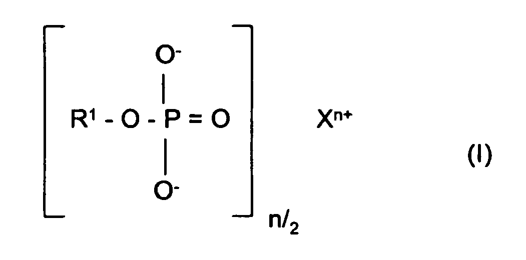 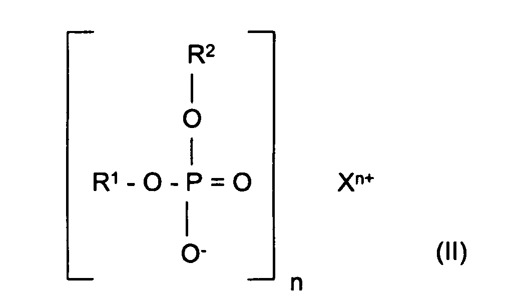 worin
R¹ und R² gleich oder verschieden sind und unabhängig voneinander für einen linearen oder verzweigten Alkylrest mit 1 bis 30 Kohlenstoffatomen oder für einen linearen oder verzweigten Alkenylrest mit 2 bis 30 Kohlenstoffatomen stehen und
Xⁿ⁺ für ein Kation mit der Wertigkeit n steht,
**dadurch gekennzeichnet, dass** Alk(en)ylphosphorsäureester der Formel (III) und/oder der Formel (IV) 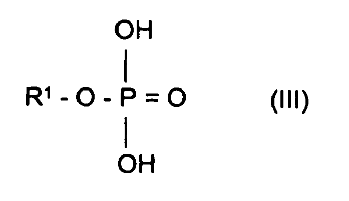 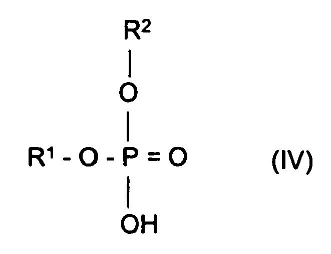 worin
R¹ und R² die oben angegebene Bedeutung besitzen,
in einem aprotischen Lösungsmittel oder aprotischen Lösungsmittelgemisch ausgewählt aus aliphatischen Kohlenwasserstoffen, cyclischen Kohlenwasserstoffen, aromatischen Kohlenwasserstoffen und Mischungen der genannten Lösungsmittel mit einer Base, aus der das Kation Xⁿ⁺ hervorgeht, umgesetzt werden.

2. Verfahren nach Anspruch 1, **dadurch gekennzeichnet, dass** als Alk(en)ylphosphorsäureester eine Mischung enthaltend Alk(en)ylphosphorsäureester der Formeln (III) und (IV) eingesetzt wird, wobei der Anteil an Alk(en)ylphoshorsäureester(n) der Formel (III), bezogen auf die Mischung, größer 60 Gew.-% und bevorzugt größer 80 Gew.-% ist.

3. Verfahren nach Anspruch 1 oder 2, **dadurch gekennzeichnet, dass** R¹ und R² gleich oder verschieden sind und unabhängig voneinander für einen linearen oder verzweigten Alkylrest mit 6 bis 22 Kohlenstoffatomen oder für einen linearen oder verzweigten Alkenylrest mit 6 bis 22 Kohlenstoffatomen stehen.

4. Verfahren nach mindestens einem der Ansprüche 1 bis 3, **dadurch gekennzeichnet, dass** die Base in Form einer konzentrierten wässrigen Lösung, einer gesättigten wässrigen Lösung oder in Form eines Pulvers eingesetzt wird.

5. Verfahren nach Anspruch 4, **dadurch gekennzeichnet, dass** die Base in Form einer gesättigten wässrigen Lösung eingesetzt wird.

6. Verfahren nach mindestens einem der Ansprüche 1 bis 5, **dadurch gekennzeichnet, dass** die Base ausgewählt ist aus Metallhydroxiden, Metalloxiden, Ammoniak, primären Aminen, sekundären Aminen, tertiären Aminen, Alkanolaminen, Aminosäuren und Mischungen dieser Substanzen.

7. Verfahren nach Anspruch 6, **dadurch gekennzeichnet, dass** die Base ausgewählt ist aus Alkalimetallhydroxiden, Erdalkalimetallhydroxiden und Mischungen dieser Substanzen.

8. Verfahren nach Anspruch 7, **dadurch gekennzeichnet, dass** die Base ausgewählt ist aus NaOH, KOH, Ca(OH)₂ und Mischungen dieser Substanzen und vorzugsweise KOH ist.

9. Verfahren nach mindestens einem der Ansprüche 1 bis 8, **dadurch gekennzeichnet, dass** das Molverhältnis von Alk(en)ylphosphorsäureester(n) zu Base im Bereich von 1 : 0,1 bis 1 : 2, vorzugsweise von 1 : 0,75 bis 1 : 1,25, besonders bevorzugt von 1 : 0,9 bis 1 : 1,1 liegt und insbesondere bevorzugt 1 : 1 ist.

10. Verfahren nach einem der Ansprüche 1 bis 9, **dadurch gekennzeichnet, dass** das aprotische Lösungsmittel oder das aprotische Lösungsmittelgemisch ausgewählt ist aus Pentan, Hexan, Heptan, Cyclohexan, Toluol, Xylolen und Mischungen dieser Lösungsmittel.

11. Verfahren nach Anspruch 10, **dadurch gekennzeichnet**, das das Lösungsmittel Cyclohexan ist.

12. Verfahren nach mindestens einem der Ansprüche 1 bis 11, **dadurch gekennzeichnet, dass** die Umsetzung der Alk(en)ylphosphorsäureester mit der Base bei Temperaturen von 0 bis 300°C und vorzugsweise bei Temperaturen von 25 bis 180°C stattfindet und über einen Zeitraum von 0,1 bis 10 Stunden und vorzugsweise über einen Zeitraum von 0,1 bis 5 Stunden erfolgt.

## Claims

1. A process for the preparation of alk(en)ylphosphoric ester salts of the formula (I) and/or of the formula (II) 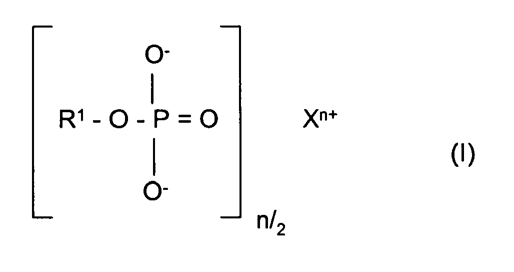 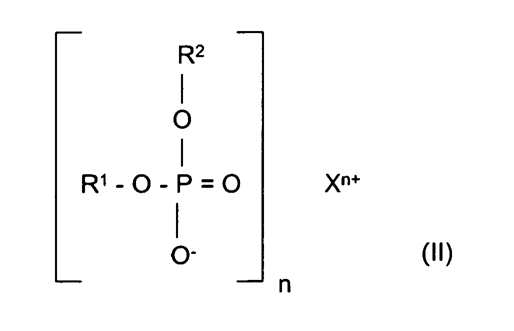 in which
R¹ and R² are identical or different and, independently of one another, are a linear or branched alkyl radical having 1 to 30 carbon atoms or are a linear or branched alkenyl radical having 2 to 30 carbon atoms and
Xⁿ⁺ is a cation with the valence n,
which comprises reacting alk(en)ylphosphoric esters of the formula (III) and/or of the formula (IV) 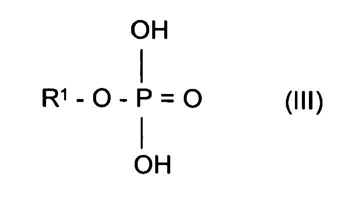 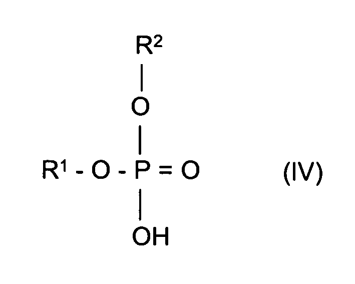 in which
R¹ and R² have the meaning given above,
in an aprotic solvent or aprotic solvent mixture chosen from aliphatic hydrocarbons, cyclic hydrocarbons, aromatic hydrocarbons and mixtures of said solvents with a base from which the cation Xⁿ⁺ comes.

2. The process as claimed in claim 1, wherein the alk(en)ylphosphoric ester used is a mixture comprising alk(en)ylphosphoric esters of the formulae (III) and (IV), where the fraction of alk(en)ylphosphoric ester(s) of the formula (III), based on the mixture, is greater than 60% by weight and preferably greater than 80% by weight.

3. The process as claimed in claim 1 or 2, wherein R¹ and R² are identical or different and, independently of one another, are a linear or branched alkyl radical having 6 to 22 carbon atoms or are a linear or branched alkenyl radical having 6 to 22 carbon atoms.

4. The process as claimed in at least one of claims 1 to 3, wherein the base is used in the form of a concentrated aqueous solution, a saturated aqueous solution or in the form of a powder.

5. The process as claimed in claim 4, wherein the base is used in the form of a saturated aqueous solution.

6. The process as claimed in at least one of claims 1 to 5, wherein the base is chosen from metal hydroxides, metal oxides, ammonia, primary amines, secondary amines, tertiary amines, alkanolamines, amino acids and mixtures of these substances.

7. The process as claimed in claim 6, wherein the base is chosen from alkali metal hydroxides, alkaline earth metal hydroxides and mixtures of these substances.

8. The process as claimed in claim 7, wherein the base is chosen from NaOH, KOH, Ca(OH)₂ and mixtures of these substances and is preferably KOH.

9. The process as claimed in at least one of claims 1 to 8, wherein the molar ratio of alk(en)ylphosphoric ester(s) to base is in the range from 1:0.1 to 1:2, preferably from 1:0.75 to 1:1.25, particularly preferably from 1:0.9 to 1:1.1 and is particularly preferably 1:1.

10. The process as claimed in one of claims 1 to 9, wherein the aprotic solvent or the aprotic solvent mixture is chosen from pentane, hexane, heptane, cyclohexane, toluene, xylenes and mixtures of these solvents

11. The process as claimed in claim 10, wherein the solvent is cyclohexane.

12. The process as claimed in at least one of claims 1 to 11, wherein the reaction of the alk(en)ylphosphoric esters with the base takes place at temperatures of from 0 to 300°C and preferably at temperatures of from 25 to 180°C and is carried out over a period of from 0.1 to 10 hours and preferably over a period of from 0.1 to 5 hours.

## Revendications

1. Procédé pour la préparation de sels de phosphates d'alkyle/alcényle de formule (I) et/ou de formule (II) 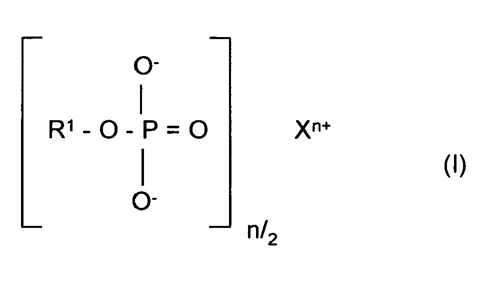 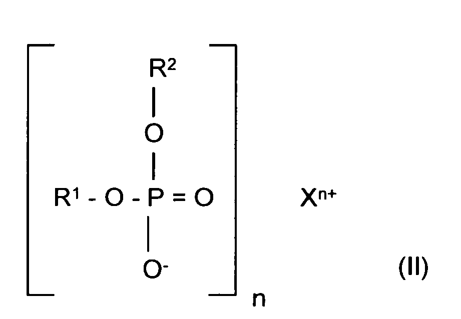 formules dans lesquelles
R¹ et R² sont identiques ou différents et représentent, indépendamment l'un de l'autre, un radical alkyle linéaire ou ramifié ayant de 1 à 30 atomes de carbone ou un radical alcényle linéaire ou ramifié ayant de 2 à 30 atomes de carbone et
xⁿ⁺ représente un cation ayant la valence n,
**caractérisé en ce qu'**on fait réagir des phosphates d'alkyle/alcényle de formule (III) et/ou de formule (IV) 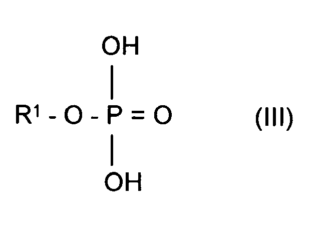 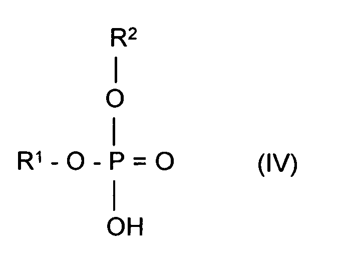 formules dans lesquelles
R¹ et R² ont la signification indiquée ci-dessus,
dans un solvant aprotique ou mélange de solvants aprotiques, choisi(s) parmi des hydrocarbures aliphatiques, des hydrocarbures cycliques, des hydrocarbures aromatiques et des mélanges des solvants cités, avec une base, de laquelle provient le cation Xⁿ⁺.

2. Procédé selon la revendication 1, **caractérisé en ce qu'**on utilise comme phosphate d'alkyle/alcényle un mélange contenant des phosphates d'alkyle/alcényle de formules (III) et (IV), la teneur en phosphate(s) d'alkyle/alcényle de formule (III), par rapport au mélange, étant supérieure à 60 % en poids et de préférence supérieure à 80 % en poids.

3. Procédé selon la revendication 1 ou 2, **caractérisé en ce que** R¹ et R² sont identiques ou différents et représentent un radical alkyle linéaire ou ramifié ayant de 6 à 22 atomes de carbone ou un radical alcényle linéaire ou ramifié ayant de 6 à 22 atomes de carbone.

4. Procédé selon au moins l'une des revendications 1 à 3, **caractérisé en ce que** la base est utilisée sous forme d'une solution aqueuse concentrée, d'une solution aqueuse saturée ou sous forme d'une poudre.

5. Procédé selon la revendication 4, **caractérisé en ce que** la base est utilisée sous forme d'une solution aqueuse saturée.

6. Procédé selon au moins l'une des revendications 1 à 5, **caractérisé en ce que** la base est choisie parmi des hydroxydes de métaux, des oxydes de métaux, l'ammoniac, des amines primaires, des amines secondaires, des amines tertiaires, des alcanolamines, des acides aminés et des mélanges de ces substances.

7. Procédé selon la revendication 6, **caractérisé en ce que** la base est choisie parmi des hydroxydes de métaux alcalins, des hydroxydes de métaux alcalino-terreux et des mélanges de ces substances.

8. Procédé selon la revendication 7, **caractérisé en ce que** la base est choisie parmi NaOH, KOH, Ca(OH)₂ et des mélanges de ces substances et de préférence est KOH.

9. Procédé selon au moins l'une des revendications 1 à 8, **caractérisé en ce que** le rapport molaire du/des phosphate(s) d'alkyle/alcényle à la base se situe dans la plage de 1 : 0,1 à 1 : 2, de préférence de 1 : 0,75 à 1 : 1,25, de façon particulièrement préférée de 1 : 0,9 à 1 : 1,1 et de façon particulièrement préférée est 1 : 1

10. Procédé selon l'une quelconque des revendications 1 à 9, **caractérisé en ce que** le solvant aprotique ou le mélange de solvants aprotiques est choisi parmi le pentane, l'hexane, l'heptane, le cyclohexane, le toluène, les xylènes et des mélanges de ceux-ci.

11. Procédé selon la revendication 10, **caractérisé en ce que** le solvant est le cyclohexane.

12. Procédé selon au moins l'une des revendications 1 à 11, **caractérisé en ce que** la réaction des phosphates d'alkyle/alcényle avec la base a lieu à des températures de 0 à 300 °C et de préférence à des températures de 25 à 180 °C et s'effectue pendant une durée de 0,1 à 10 heures et de préférence pendant une durée de 0,1 à 5 heures.
